Europäisches Patentamt

European Patent Office

Office européen des brevets

(11) Publication number : **0 422 741 B1**

# EUROPEAN PATENT SPECIFICATION

(45) Date of publication of patent specification :
**13.04.94 Bulletin 94/15**

(51) Int. Cl.$^5$ : **C04B 28/20, C04B 40/00**

(21) Application number : **90202688.9**

(22) Date of filing : **11.10.90**

(54) **Method for preparing a mortar of lime and sand, sand-lime bricks produced thereof and apparatus for the preparation of the mortar of lime and sand.**

(30) Priority : **11.10.89 NL 8902515**

(43) Date of publication of application :
**17.04.91 Bulletin 91/16**

(45) Publication of the grant of the patent :
**13.04.94 Bulletin 94/15**

(84) Designated Contracting States :
**AT BE CH DE DK ES FR GB GR IT LI LU NL SE**

(56) References cited :
**DE-C- 309 708**
**DE-C- 582 950**
**FR-A- 599 918**
**GB-A- 952 362**
**US-A- 2 584 604**

(73) Proprietor : **KALKZANDSTEENFABRIEK HARDERWIJK B.V.**
**Einsteinstraat 5**
**NL-3840 AB Harderwijk (NL)**

(72) Inventor : **Schalij, Jan**
**Beekweg 85**
**Hulsthorst (NL)**
Inventor : **Broekhuis, Jan**
**Varelseweg 50**
**Hulsthorst (NL)**

(74) Representative : **Van kan, Johan Joseph Hubert, Ir. et al**
**Algemeen Octrooibureau P.O. Box 645**
**Boschdijk 155**
**NL-5612 HB Eindhoven (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process for the preparation of a mortar of lime and sand by mixing lime, sand, possibly additives and water at an elevated temperatur and a pressure above 200 kPa in a closed reaction vessel. The invention further relates to the bricks of lime-sand, produced with such a mortar of lime-sand and is relating to an appartus for the preparation of the mortar of lime-sand.

Sand-lime bricks have been produced for centuries, and as early as in 1880 a patent for producing sand-lime brick was granted in Germany, under No. 14,195. From this Patent Specification it appears that already in those days it was possible to use additives besides the essential starting substances lime, sand and water. A general survey of the use of lime for producing bricks is provided by Dr. Ing. Leo W. Berens, in the book "Kalk" Herstellung-Eigenschaften-Verwendung (lime, production, properties, uses) 1972, published by Verlag Stahleisen M.B.H./Düsseldorf. Of this book especially pages 205 - 212 and 397 - 417 are important. On page 211 reference is made to two US Patents, viz. 2,409,546 and 2,309,168 in the name of B. Corson, which disclose that lime has been slaked with water in an autoclave.

British patent 952,362 (1964) discloses a process for the preparation of sand-lime mortars in which at elevated temperature and pressure, being a pressure of 2-5 atmosphere in example I and 2.7-3.4 atmosphere in example II, during a time of 30-60 minutes the reaction has been carried out (1 atmosphere is about 100 kPa). Now it appeared to be possible that the reaction can be carried out much faster and one can be more sure that an end product has been obtained in which the lime has been slaked completely. Because of the fact that the reaction is stronger, it also is possible to use a lime comprising starting material that is cheaper.

German patent 582,950 (1931) also discloses a process for the preparation of sand-lime mortars in which one uses the heat arising from slaking of the lime. The reaction tube has been closed at the outer parts by the materials that have been supplied at one side and by the discharged materials at the other side. Because of the fact that in these mixtures pores will exist, it will be clear that it is nearly impossible to carry out the reaction according to this German patent at elevated pressure. Also according to German patent 309,708 (1917) slaking has been carried out at atmospheric pressure.

French patent 599,918 (1926) discloses a general process for the preparation of lime stones by supplying to a pressure vessel the starting materials in a ratio as necessary for the reaction. Then steam has been supplied in order to slake the lime. In the present invention it is unnecessary to supply steam from the outer side and the amounts of starting materials are chosen in a ratio being different from that required for the reaction to be expected.

The process presently used for producing sand-lime brick is mentioned in the brochure "kalkzandsteen in de woningbouw" (sand-lime brick in housebuilding), which was published by CVK (Centraal Verkoopkantoor voor de kalkzandsteenindustrie B.V.) No. 006,04,87, which on p. 5 reads: "For the production of sand-lime brick the raw materials sand, lime and water are required. In automatic dosaging installations the lime is mixed with sand in the correct ratio after which water is added. The mixture is then put into a reactor in which the lime is slaked for a maximum of 4 hours. Then belt conveyors carry the mixture to the presses. In these fully automated presses bricks, blocks or elements are formed, which are placed on trolleys by means of stacking equipment. Said trolleys are introduced in autoclaves for the final processing, in which autoclaves the hardening process takes place under the influence of steam, at a pressure of eight to sixteen atmosphere. Once this has been done the sand-lime brick is completely ready and can be transported to a building site or be temporarily stored on the piling yard. Altogether the production process requires less than 24 hours.".

The known method offers scope for improvement on a number of points. One of the disadvantages of the known method is that only certain kinds of lime can be used as a starting substance for the sand-lime brick. Excluded are in particular those limes which in the traditional mixing process are not or not sufficiently hydrated within the required retention time. Furthermore limes having a high magnesium content are excluded, e.g. more than 5%, because magnesia is not or not sufficiently slaked besides the lime, and as result remains present to a large extent in the mortar from which the "green" bricks are formed. In the autoclave the hardening of the green brick takes place, under circumstances which are such that magnesia is now slaked, which, as a result of hydrating, leads to an increase in volume and to cracks being formed in the brick, which is undesirable. Tests carried out have shown that it is now possible to effect the preparation of a mortar of lime and sand much faster and to remove a number of restrictions with regard to in particular the use of lime as a starting material, so that with the method according to the invention it has now become possible to use limes which could not be used so far, because their reactivity was insufficient; furthermore it is possible with the method according to the invention to use limes having a higher content of magnesia than was possible so far. Besides, the method according to the invention provides sand-lime brick having a higher compression strength than before.

The method according to the invention such as indicated in the preamble is characterized in that firstly sand and water are supplied under mixing, in which water is present in excess in regard with the amount required in the end product to slake lime completely, after which lime has been added in excess in regard with the amount of sand, so that the temperature is elevated to above 130 °C by development of heat during slaking lime and during which the elevated pressure has been obtained by the development of steam, so that it is unnecessary to supply energy from the outer side.

Preferably the process has been carried out such that slaking takes place in a closed reactor at a temperature above 140 °C and at a pressure obtained by the development of steam, of 6-9 atmosphere. During the reaction according to the invention less sand has been supplied than required in the finally desired lime-sand mortar, from which bricks can been produced, which amount of sand has been supplied lateron after which the lime has been slaked. For this reason lime is present in excess during the reaction according to the invention in regard with the amount of sand that has been supplied to the reactor, in which the amount of sand is 20-50% by weight in regard with the amount being present in the lime-sand mortar after leaning with sand. By the relatively low amount of sand added to the reactor it is possible to obtain a relatively hight temperature and pressure. The excess of water in regard with the amount of water required for slaking the lime, has been used for the development of steam and preferably the amount of water supplied to the reactor is present in an excess in regard with the amount of water required for slaking lime in an amount of 1,5-3.5 times the stoichiometric required amount for the slaking of the lime.

The invention also is concerning the lime-sand bricks produced from the mortar as prepared and is concerning the apparatus for the preparation of the mortar, which apparatus is characterized by the two mixers in sequence, of which the first mixer is for the preparation of the concentrated lime-sand mortar being a closed mixer with stirrer and capable to stand a temperature to 200 °C and a pressure to 20 atmosphere, after which a second mixer has been placed for leaning with sand, which mixing process has been carried out at room circumstances. If it is preferred to carry out the second mixing at elevated temperatur by adding water the water can be supplied that is heated by steam development in the first mixer.

The invention will be further explained by means of the following description, wherein reference is made to the accompanying drawing, in which:

Figure 1 diagrammatically indicates the production of sand-lime brick according to prior art;

Figure 2 diagrammatically indicates the production of sand-lime brick according to the invention;

Figures 3 - 7 are graphs showing the pressure and temperature changes over a certain period of time during the preparation of the mortar of lime and sand under different circumstances.

As soon as the lime comes into contact with the water present in the sand or added to the sand the slaking of the lime is started in accordance with the following reaction:

$$CaO + H_2O \rightarrow Ca(OH)_2 + 275 \text{ kcal/kg.}$$

It is of paramount importance that this reaction takes place in the best and completest possible manner, in order to achieve an optimum crystalline form. The known methods do not in the least guarantee this complete reaction, especially not if cheaper and slow-reacting limes are used. That is why usually a larger quantity of lime is dosaged than would be theoretically necessary. This makes the production costlier than absolutely necessary and moreover leads to the occurrence of undesirable side effects in the finished product. So far the procedure has generally been as follows.

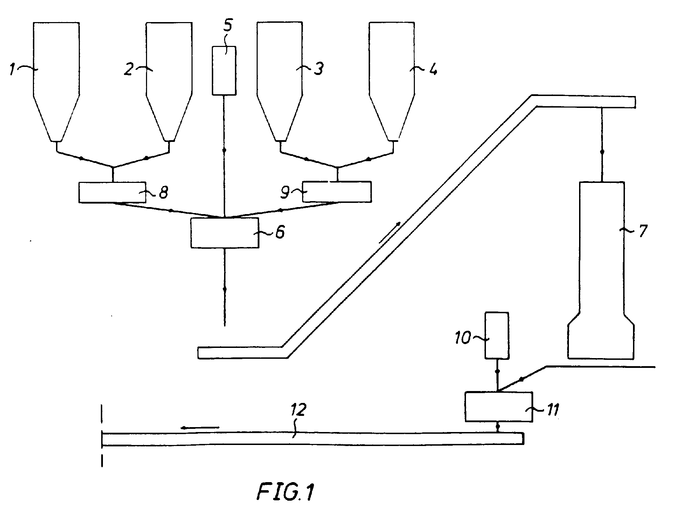

First the screening curves and the moisture percentages of the sand (and of other quartz-containing substances) are determined; insofar as necessary this is also done with the additives, if any. Then a screening curve is composed of the combination of sand and/or other quartz-containing substances and of the possibly used additives, in the proportion in which said components will be present in the mixture. Then it is determined how much lime must be added, possibly distributed over different limes. Finally it is calculated how much water is needed to form the components into a mortar of lime and sand. Said quantity of water depends on the quantity of water which is necessary for slaking the added unslaked lime and on the moisture percentage of the mortar of lime and sand required to form good sand-lime brick products thereof. The method is illustrated in Figure 1.

By means of the dosaging equipment 8 and 9 the various components from the storage hoppers 1 - 4 are weighed in the correct, pre-set proportion and then deposited into a mixer 6 whereby, dependent on the quantity selected and on the type of mixer, the mixing time is set in order to achieve a homogeneous mixing of the raw materials. Water is supplied from the container 5.

The mixture thus obtained is transported to a hopper (not shown). The hopper or the storage container may also be left out, in that case the mixing vessel is directly introduced in the reactor 7. The height and further dimensions of this reactor are such that from the moment the mixture is introduced into the reactor to the moment it is removed therefrom, said mixture is given sufficient time for the lime present therein to be slaked.

On leaving the reactor the moisture percentage of the mixture is determined, and possibly an additional quantity of water is added in order to obtain the correct moisture content for the mortar to be pressed. Because the moisture percentage of the sand and of the additives, if any, are subject to fluctuations, deliberately too little water is added during the first mixing, because it is at all times possible to add water after the slaking process in the reactor, but it is problematic to take corrective steps when afterwards it appears that the moisture percentage is too high. When the mortar leaves the reactor 7 water is possibly admixed via the container 10, by means of the mixer 11, and the final mortar is discharged towards the pressing plant via the belt conveyor 12.

Some of the drawbacks of this method are: a part of the thermal energy produced makes $H_2O$ present in the vicinity of the $Ca(OH)2$ formed and being formed vapourize. Said water vapour can freely escape and does not take part, actively or passively, in the reaction.

Due to the large quantity of sand and/or other quartz-containing and any other additives in relation to the quantity of lime, the thermal energy being released during the slaking process can only provide a small temperature increase. When the outside temperatures are low (in the winter) it will be even more difficult to achieve a sufficiently high final temperature, so that as a result it is sometimes not possible to use lime comprising magnesia.

As a consequence of the above circumstances the lime will not be slaked optimally, resulting in a slightly inferior crystalline form. Besides that the harmful effects of any further substances present in the lime will not be neutralized.

Magnesia must also be slaked during the slaking process of the lime. This will not happen with the known method, however. Only during the subsequent autoclave process, when the green brick is hardened under the influence of steam at a high temperature and a high pressure, the conditions have been created for the magnesia present in the mixture to be slaked sufficiently. As a result of the reaction: $MgO + H_2O \rightarrow Mg(OH)_2$ the volume increases, as a result of which unacceptable swelling and/or cracking of the sand-lime brick products may occur. Because of stricter dimensional tolerances, in connection with the modern processing method by means of glueing, and because of the stricter requirements made for the dimensions of new high-grade sand-lime brick products, swelling by as much as 0.5 - 1% in some cases as a result of magnesium being present in the mixture may lead to unacceptable situations. Apart from that, cracking caused by an increase in volume as a result of the slaking of magnesia during the autoclave process is by itself already unacceptable.

Some of the objects of the invention are:

a) adapting the method of preparation so that it becomes possible to use limes which so far have been excluded, because their reactivity was too low or because they contained too much magnesia,

b) making it possible to select from a wider range of additives, such as fly ash,

c) minimizing the emission of dust and moisture during the preparation,

d) rendering the preparation of mortar of lime and sand insensitive to seasonal influences,

e) improving the mechanical properties of the sand-lime brick obtained, such as enhancing the compression strength, reducing the amount of breakage and reducing the water-absorbing capacity, and reducing the sensitivity to moisture of the sand-lime brick produced.

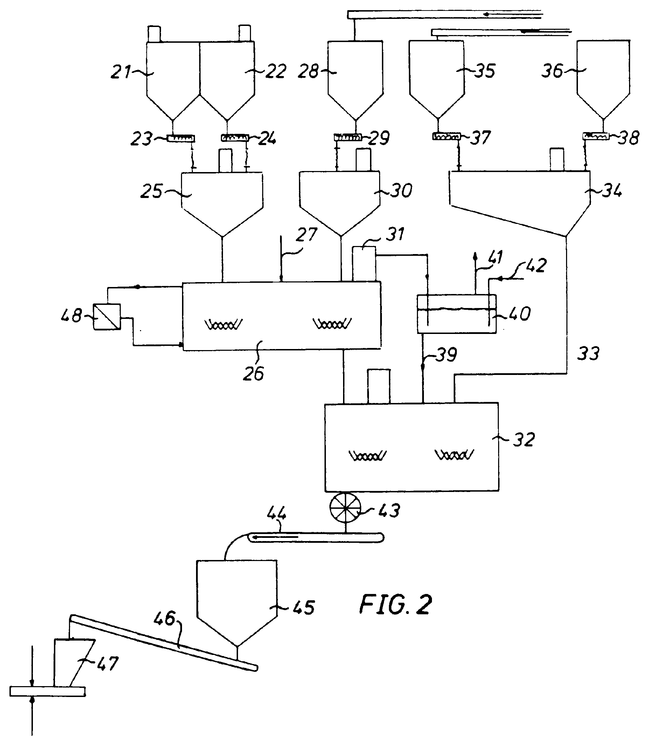

These objectives can be accomplished by using a method according to the invention, for which purpose a production scheme as indicated in Figure 2 can be used.

Figure 2 diagrammatically illustrates the production scheme according to the invention. Lime or a mixture of lime and additives is transported from hoppers 21 and 22 respectively, by means of screw conveyors 23 and 24, and supplied to the weighing hopper 25. Said substances are in dry condition and if a mixture is used said mixture is mixed homogeneously. The substances to be used hereby may consist of lime, whereby several limes may be used, and fly ash, ground whirl bed ash and the like may be used as additives. Fine sand is supplied from the storage hopper 28 to the pressure mixer 26, said sand being supplied to a weighing hopper 30 by means of a screw conveyor 29. At the same time water is supplied via the conduit 37. Prior to this the moisture content of the sand is determined and a screening curve is made, on the basis of these data it is calculated how much water is to be added and how much lime or lime mixture is to be added to the pressure mixer 26 at a later stage. After the sand and the water have been sufficiently mixed the mixing is stopped, and the lime or the lime mixture is supplied to the pressure mixer 26 via the weighing hopper 25, said addition taking place all at once. Immediately after the lime or the lime mixture has been added the pressure mixer 26 is closed and stirring is started. As soon as the lime is slaked under the influence of the water present in the pressure mixer, the heat released will make the temperature in the pressure mixere 26 rise quickly and convert the excess water into steam, the reaction being continued at an increased temperature and pressure. Under these circumstances the lime will be slaked fast and also magnesia, if present, will be slaked. After the reaction has ended the steam will be blown off via the steam dome 31, so that a lime-rich mixture having a remaining moisture content lower than 2% is left. As soon as the atmospheric pressure is reached the pressure mixer is opened and the mixture is discharged to the re-mixer 32. In said re-mixer the lime-rich mixture is made leaner by adding sand and possibly additives via the conduit 33, which is in communication with a weighing hopper 34, to which sand and any additives are supplied from the storage hoppers 35 and 36 respectively, via the screw conveyors 37 and 38. Making the mixture leaner or adding sand and possible additives to the re-mixer preferably takes place in the above manner, in order to obtain the highest possible concentration of lime in the pressure mixer, so that a great deal of thermal energy is generated in order to have the slaking process take place in an optimum manner. It is also possible to supply water to the re-mixer 32 via the conduit 39, said water originating from the condensed steam obtained from the steam dome 31 via a wet filter having a water seal, as indicated at 40. From said wet filter 40 steam and/or water can be discharged via the conduit 41, and water can be supplied via the conduit 42. In the re-mixer 32 the eventual composition for the mortar of lime and sand is obtained, which is discharged to the belt conveyor 44 via the link roll feeder 43. The belt conveyor 44 discharges into a hopper 45, which serves as an intermediate storage container and which discharges onto a belt conveyor 46 which supplies the mortar to the sand-lime brick press 47, from which the green bricks are obtained.

The wet filter 40, which is in communication with the steam dome 31, takes care of it that no solid dust particles are emitted into the atmosphere, but are caught in the filter 40. Furthermore the pressure mixer 36 may be provided with a cooler 48, so that the temperature of the pressure mixer can be further regulated, if desired.

As a result of the high temperature and pressure being in the pressure mixer 26 the lime and the magnesia, if present, are slaked in a required manner within a short period of time of about 1 minute, after which slaked lime having an area of 30 - 35 $m^2/g$ is obtained. This area is about twice as large as the area of the slaked lime obtained by means of a process known per se, such as the process indicated in Figure 1. The advantage of said larger area per weight unit is that less lime may be used, because the lime now obtained provides a better binding than the slaked lime used so far. Making the mixture leaner in the re-mixer 32 takes place as quickly as possible at the highest possible temperature, for this purpose, if required, water is supplied via the conduit 39, said water having a temperature of 70 - 95 °C, since it originates from the steam dome 31.

The invention will be further explained by means of the following examples and comparative examples.

Comparative example 1

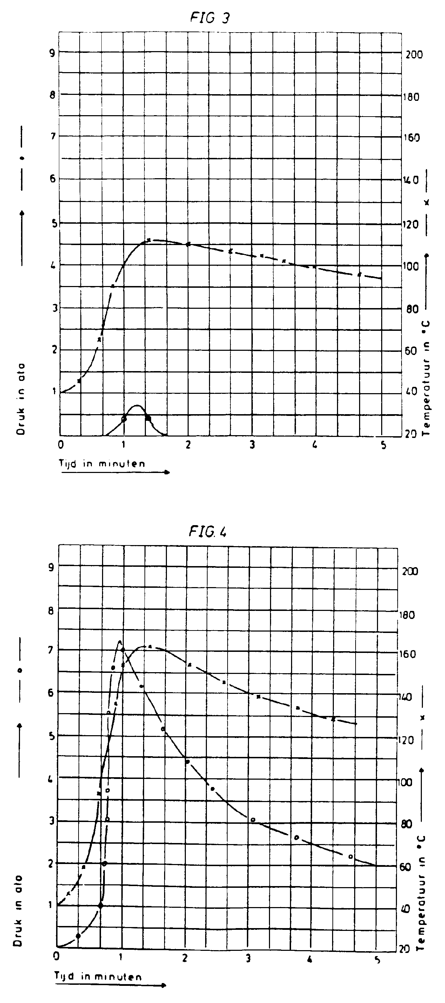

The comparative examples 1-3 and example 1 according to the invention were carried out in a laboratory mixer having a capacity of 91 1. In this mixer a mixture of 18.6 kg of Dumont-Wautier lime and 57.4 kg of sand having a moisture content of 5% were mixed with 9.9 kg of water. In comparative example 1 the steam that was produced in the pressure mixer 26 was blown off. First sand and then the indicated quantity of lime were introduced in the pressure mixer 26. Said mixture was stirred and after 15 seconds water was supplied. Water has been supplied during 5 seconds. After said supplying of water the lime was slaked further. Because of the steam that was developed a slight pressure increase of about 0.75 atmosphere was effected, whilst the temperature reached a maximum value of 111 °C. After two minutes the material was slaked and after 6 minutes the test was ended. The temperature and pressure changes are shown in Figure 3. A small part of the lime-rich mixture was made leaner by means of sand to obtain a mortar having a lime content of 6 per cent by weight for producing sand-lime bricks. Test specimens were made of the leaner mixture, of which specimens the green strength was determined; a few other test specimens were subsequently hardened. The data with regard to the mechanical properties are mentioned in the table below.

Comparative example 2

In this example the steam outlet in the pressure mixer 26 was closed and first sand and then lime were introduced in the mixer and then mixed. After 30 seconds the mixing water was supplied for about 10 seconds. Subsequent to and during the period that water was supplied the lime was being slaked. The pressure in the pressure mixer ran up to 7 atmosphere during slaking, and the temperature reached a value of 162 °C. After 1.5 minute the material was slaked and after 6 minutes the pressure mixer was opened. The temperature and pressure changes are illustrated in Figure 4. Also here the lime-rich mixture was made leaner in the remixer 32 to 6 per cent by weight of $Ca(OH)_2$, and test specimens were made of the leaner mixture, of which specimens the green strength was determined; other test specimens were hardened and subsequently subjected to strength tests. The data with regard to the mechanical properties are mentioned in the table below. The results of these tests are also shown in the table below.

Comparative example 3

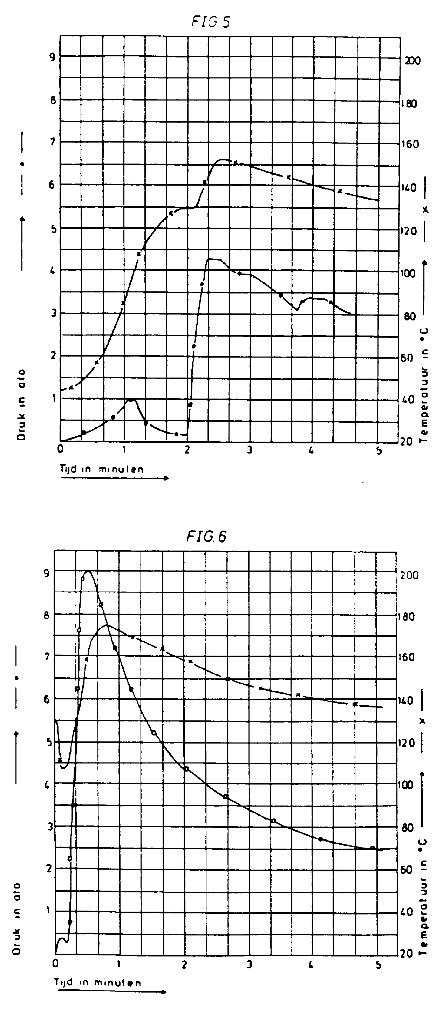

In this example Dumont-Watier lime containing 5% MgO was used. Said lime was pre-mixed with sand during 2 minutes, already during said pre-mixing a considerable elevation of temperature increase took place. After water had been supplied a considerable pressure took place, and a further increase in the temperature, as illustrated in Figure 5. After 5 minutes the pressure was blown off and the lime-rich mixture was discharged to the re-mixer 32, where during mixing said mixture was made leaner to 6 per cent by weight $Ca(OH)_2$ by adding sand. Thus a mortar having a usual lime content was obtained; test specimens were made of the l:eaner mixture, of which specimens the green strength was determined. Other test specimens were hardened and subsequently their mechanical properties were determined, as mentioned in the table.

Example I

In this example according to the invention water and sand were first introduced in the pressure mixer 26, and after stirring, lime was added all at once. Within 30 seconds the pressure ran up to about 9 atmosphere, and the temperature ran up to 173 °C. From these data is is already apparent that an intensive reaction has taken place. From the test results obtained, illustrated in the following table, it can be derived that it is preferred to use this sequence of adding starting materials. As in the comparative examples further measuring was carried out on leaner mortar, from which green bricks were made, subsequently the mechanical properties were determined, as illustrated in the table. The data with regard to temperature and pressure changes are shown in Figure 6.

Example II

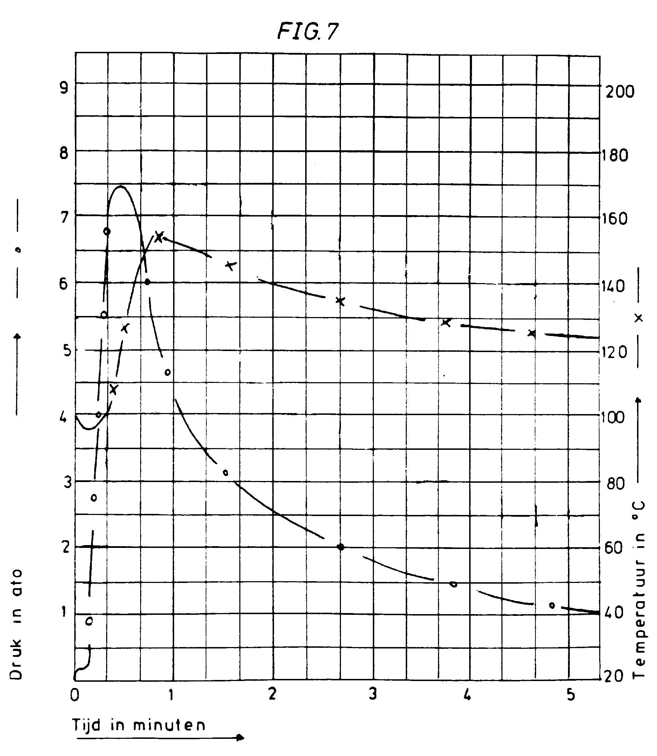

In a mixer of 2000 l one supplied 1412 kg sand comprising 8% moisture (1299 kg dry sand + 113 kg water) together with 32.1 kg water. The mixture of sand and water was mixed intensively and to this mixture one added in one time 284 kg lime, of which 88% is active (250 kg pure CaO and 34 kg relatively inert material). After the additon of the lime an elevation of temperature and pressure took place as it has been indicated in fig. 7.

The obtained mortar comprised 20 wt.% $Ca(OH)_2$ and was after removal from the mixer leaned with sand to 6 wt.% $Ca(OH)_2$ by the addition of 3658 kg sand. This added sand had a moisture content of about 5 wt.%, so that the moisture content in the mortar as finally obtained is lower than 5 wt.%.

Experiments and measuring.

Of the leaned material cylindrical tablets were pressed at a pressure of 35 N/mm2, of which tablets the green strength was determined. Besides that a few test specimens were made, which specimens were hardened. Hardening took place at a steam pressure of 12 atmosphere during 6 hours.

The leaned mortars were obtained by in the compartive examples 1-3 and in example I admixing 237.5 g of dry mixture of the lime-rich mortar obtained from the pressure mixer 26 with 828.9 g of sand having a moisture content of 5%, so that a final lime content of 6 per cent by weight $Ca(OH)_2$ was obtained in the leaned mortar.

Table

| Example No. | green strength kPa | pressure strength $N/mm^2$ | free CaO% |
|---|---|---|---|
| 1* | 8.3 | 34.2 | 0.8 |
| 2* | 8.9 | 40.3 | 0.4 |
| 3* | 9.9 | 36.8 | 0.4 |
| I | 10.6 | 45.3 | 0.3 |
| II | 10,7 | 45,4 | 0,4 |

Note: * is a comparative example.

The test results of examples I and II show that the best results have been obtained by introducing water and sand first and then add lime.

## Claims

1. Method for preparing a mortar of lime-sand by mixing lime, sand, possibly additives and water at elevated temperature and pressure above 200 kPa in a closed reaction vessel, characterized in that at first sand and water are supplied under mixing, in which water is present in an excess in regard with the amount required in the end product to slake the lime completely, after which lime has been added in an excess in regard with the amount of sand, so that the temperature rises to above 130 °C, by the development of heat from slaking the lime and by which also the elevated pressure is obtained by development of steam, so that it is unnecessary to add energy from the outer side.

2. Method according to claim 1, characterized in that the amount of lime has been added at once to the mixture of sand and water.

3. Method according to claims 1 - 2, characterized in that slaking the lime has been carried out at a temperature above 140 °C and at a pressure of 600-900 kPa.

4. Method according to claims 1 - 3, characterized in that the amount of water is 1.5-3.5 times the stoichiometric amount needed for slaking the lime.

5. Method according to claims 1 - 4, characterized in that slow-acting limes and/or limes having a comparatively high magnesia content are used besides the lime which is normally used.

6. Method according to claims 1 - 5, characterized in that the mixing of the starting substances takes place in two steps, by first preparing a concentrated lime mortar which, after slaking has taken place, is made leaner by adding sand, in which first step the amount of sand is 20-50 wt.% of the amount required for the amount after leaning.

7. Sand-lime bricks made of a mortar of lime and sand by pressing said mortar having a lime content of about 6 per cent by weight into bricks in a press, in order to obtain mouldings which are finally hardened into sand-lime bricks in an autoclave, and to remove said bricks after the pressure has been blown off, characterized in that a mortar of lime and sand such as disclosed in claims 1 - 6 has been used.

8. Apparatus for the preparation of lime-sand mortar according to claim 6, characterized in that after the first mixer with stirrer to be used at a pressure between 2 and 10 atmosphere and a temperatuer to 200 °C a second mixer has been placed to be used at circumstances as in the environment or at elevated temperature.

## Patentansprüche

1. Verfahren zum Zubereiten von Mörtel aus Kalk-Sand durch Mischen von Kalk, Sand, möglichen Zusätzen und von Wasser bei erhöhter Temperatur und einem Druck über 200 kPa in einem geschlossenen Reaktionsbehälter,
dadurch gekennzeichnet, daß zuerst Sand und Wasser unter Mischen zugeführt werden, wobei Wasser im Hinblick auf die zum vollständigen Löschen des Kalks im Endprodukt benötigte Menge im Überschuß anwesend ist, worauf Kalk im Überschuß im Hinblick auf den Gehalt an Sand zugegeben wird, so daß die Temperatur infolge der Entwicklung von Wärme durch das Löschen des Kalks über 130 °C ansteigt und der erhöhte Druck durch die Entstehung von Dampf erreicht wird, so daß der Zusatz von Energie von außen unnötig ist.

2. Verfahren nach Anspruch 1,
dadurch gekennzeichnet, daß der Gehalt an Kalk der Mischung von Sand und Wasser auf einmal zugegeben wird.

3. Verfahren nach den Ansprüchen 1 - 2,

**dadurch gekennzeichnet,** daß das Löschen des Kalks bei einer Temperatur von über 140 °C und bei einem Druck von 600 bis 900 kPa ausgeführt wird.

4. Verfahren nach den Ansprüchen 1 - 3,
**dadurch gekennzeichnet,** daß der Gehalt an Wasser das 1,5- bis 3,5-fache des stöchiometrischen Gehalts beträgt, welcher benötigt wird, um den Kalk zu löschen.

5. Verfahren nach den Ansprüchen 1 - 4,
**dadurch gekennzeichnet,** daß langsam wirksame Kalke und/oder Kalke mit einem verhältnismäßig hohen Magnesiumoxidgehalt neben normalem Kalk verwendet werden.

6. Verfahren nach den Ansprüchen 1 - 5,
**dadurch gekennzeichnet,** daß das Mischen der Ausgangssubstanzen in zwei Schritten stattfindet, wobei zunächst ein konzentrierter Kalkmörtel hergestellt wird, der, nachdem das Löschen stattgefunden hat, durch das Zusetzen von Sand magerer gemacht wird und wobei in dem ersten Schritt der Gehalt an Sand 20 bis 50 Gew.-% des Gehalts ist, der nach dem Abmagern benötigt wird.

7. Sand-Kalk-Steine, hergestellt aus einem Mörtel aus Kalk und Sand durch Pressen des Mörtels, der einen Kalkgehalt von etwa 6 Gew.-% hat, in die Form von Steinen in einer Presse, um Formlinge zu erzeugen, die schließlich in einem Autoklaven in Sand-Kalk-Steine ausgehärtet werden, die nach dem Ablassen des Drucks entfernt werden,
**dadurch gekennzeichnet,** daß der Mörtel aus Kalk und Sand verwendet wird, wie er in den Ansprüchen 1 bis 6 offenbart ist.

8. Vorrichtung zur Herstellung von Kalk-Sand-Mörtel nach Anspruch 6,
**dadurch gekennzeichnet,** daß nach einem ersten Mischer mit Rührer, der bei einem Druck zwischen 2 und 10 Atmosphären und einer Temperatur bis 200 °C verwendet wird, ein zweiter Mischer angeordnet ist, der verwendet wird unter Umgebungsbedingungen oder bei erhöhten Temperaturen.

## Revendications

1. Procédé pour préparer un mortier de chaux et de sable en mélangeant de la chaux, du sable, et éventuellement des additifs, et de l'eau à une température élevée et sous une pression supérieure à 200 kPa dans une cuve de réaction fermée, caractérisé en ce que l'on alimente tout d'abord du sable et de l'eau en les mélangeant, l'eau étant présente en excès par rapport à la quantité nécessaire dans le produit final afin d'éteindre complètement la chaux, après quoi on ajoute de la chaux en excès par rapport à la quantité de sable, de sorte que la température s'élève jusqu'à au-dessus de 130°C par le développement de chaleur dûe à l'extinction de la chaux, et grâce à quoi on obtient également la pression élevée par développement de vapeur, de sorte qu'il n'est pas nécessaire d'ajouter de l'énergie depuis l'extérieur.

2. Procédé selon la revendication 1, caractérisé en ce que la quantité de chaux est ajoutée en une seule fois au mélange de sable et d'eau.

3. Procédé selon les revendications 1 à 2, caractérisé en ce que l'extinction de la chaux est effectuée à une température au-dessus de 140°C et une pression de 600 à 900 kPa.

4. Procédé selon les revendications 1 à 3, caractérisé en ce que la quantité d'eau est de 1,5 à 3,5 fois la quantité stoechiométrique nécessaire pour éteindre la chaux.

5. Procédé selon les revendications 1 à 4, caractérisé en ce qu'on utilise, outre la chaux normalement utilisée, des chaux à action lente et/ou des chaux ayant une teneur comparativement élevée en magnésie.

6. Procédé selon les revendications 1 à 5, caractérisé en ce que le mélange des substances de départ est effectué en deux étapes, en préparant tout d'abord un mortier de chaux concentrée qui, après que l'extinction se soit produite, est rendu plus maigre en ajoutant du sable, la quantité de sable au cours de la première étape étant entre 20 et 50% en poids de la quantité requise après appauvrissement.

7. Briques de sable et de chaux réalisées en un mortier de chaux et de sable en comprimant ledit mortier ayant une teneur de chaux d'environ 6% en poids dans une presse pour former des briques, afin d'obtenir des moulages qui sont finalement durcis dans un autoclave pour former des briques de sable et de chaux, lesdites briques étant enlevées après échappement de la pression, caractérisées en ce qu'on a utilisé un mortier de chaux et de sable tel que décrit dans les revendications 1 à 6.

8. Appareil pour la préparation de mortier de chaux et de sable selon la revendication 6, caractérisé en ce qu'à la suite d'un premier mélangeur avec un agitateur que l'on utilise sous une pression entre 2 et 10 atmosphères et une température jusqu'à 200°C, on place un second mélangeur à utiliser selon les circonstances comme dans l'environnement ou à une température élevée.

FIG.1

FIG. 2

EP 0 422 741 B1

FIG 3

FIG. 4

EP 0 422 741 B1

FIG. 5

FIG. 6

13

## FIG. 7

Druk in ato

Tijd in minuten

Temperatuur in °C